# FASCICULE DE BREVET EUROPEEN

(11) **EP 1 916 045 B1**
(45) Date de publication et mention de la délivrance du brevet: **10.04.2013**
(21) Numéro de dépôt: 07291289.2
(22) Date de dépôt: 24.10.2007
(51) Int. Cl.: B23B 47/34

(54) **Machine de perçage d'un alésage**
Vorrichtung zur Bohrung einer Aufnahmebohrung
Device for drilling a bore

(30) Priorité: 27.10.2006 FR 0609484
(43) Date de publication de la demande: 30.04.2008
(73) Titulaire: Cooper Power Tools SAS, 77330 Ozoir la Ferrière (FR)
(72) Inventeur: Jaillon, Jacques Henri, 93130 Noisy le Sec (FR)
(74) Mandataire: Domenego, Bertrand

(56) Documents cités:
- EP-A- 1 500 780
- DE-A1- 2 436 340
- US-A- 2 453 136
- US-A- 5 351 797

## Description

La présente invention concerne une machine de perçage d'un alésage dans laquelle on entraîne simultanément en rotation un outil de percement en rotation le long d'un axe et en translation le long de l'axe selon un mouvement d'avance.

L'invention s'applique par exemple à la construction aéronautique.

Pour mettre en oeuvre un tel perçage dans ce type d'application, on utilise généralement une machine d'usinage comprenant :
- un carter,
- une broche porte-outils s'étendant le long d'un axe,
- un mécanisme d'entraînement de la broche porte-outils, le mécanisme comprenant :
   - un premier organe d'entraînement en rotation de la broche autour de son axe par rapport au carter,
   - un deuxième organe d'entraînement en translation de la broche le long de son axe par rapport au carter, le deuxième organe d'entraînement en translation étant vissé sur un tronçon fileté de la broche, de sorte que la broche avance ou recule le long de l'axe en fonction de la vitesse relative de rotation des organes d'entraînement.

Une machine de ce type est connue par exemple de US-5 351 797. Le mécanisme d'entraînement d'une telle machine est dit « à avance mécanique » en français ou « positive feed drill » en anglais.

Un moteur unique assure alors, via le mécanisme d'entraînement, l'entraînement de la broche en rotation autour de son axe et simultanément son avance ou son recul par translation le long de son axe.

Les entraînements en translation et en rotation de la broche étant mécaniquement liés, l'avance de la broche par tour est constante. Ainsi, les variations de la vitesse du moteur n'ont aucune incidence sur la vitesse d'avance par tour. L'épaisseur des copeaux formés reste donc constante et favorise la qualité de surface et la précision des alésages percés par une telle machine.

Si une telle machine s'avère généralement satisfaisante, son utilisation pour percer des alésages profonds ou les matériaux réputés difficiles, tels que les matériaux composites, peut s'avérer délicate.

En effet, par exemple lors du perçage d'un alésage profond, les copeaux s'accumulent dans les goujures du foret porté par la broche, jusqu'à provoquer le calage du moteur de la machine. Il est alors nécessaire de procéder en plusieurs fois ou de recommencer de nouveaux cycles de perçage pour un même alésage à percer.

La qualité du perçage peut également être dégradée en cas de mauvais repositionnement du foret par rapport à l'alésage commencé. La pression des copeaux à l'intérieur de l'alésage provoque en outre la détérioration de sa surface.

Pour résoudre ce problème, FR-2 873 315 a proposé une machine munie de moyens de déplacement du deuxième organe d'entraînement en translation le long de l'axe de la broche entre une position avancée et une position reculée. Ainsi, au cours du perçage, la broche est ressortie complètement de l'alésage sous l'action des moyens de déplacement afin d'évacuer les copeaux et d'assurer un débourrage. Si une telle extraction de la broche peut être assurée beaucoup plus rapidement que par le mouvement classique de recul de la broche, elle augmente sensiblement la durée nécessaire pour percer un alésage.

En outre, l'exécution de l'opération de débourrage nécessite un système de commande afin de respecter une fréquence prédéterminée de débourrage ou de répondre à un besoin spécifique de débourrage. Un tel système de commande est relativement complexe.

Un but de l'invention est donc de résoudre ces problèmes en fournissant une machine qui permette de percer des alésages profonds ou des matériaux réputés difficiles en un temps réduit et qui soit plus simple.

L'invention peut être appliquée au a pour objet un procédé de perçage d'un alésage dans lequel on entraîne simultanément en rotation un outil de perçage en rotation le long d'un axe et en translation le long de l'axe selon un mouvement d'avance, et dans lequel on combine au mouvement d'avance un mouvement oscillatoire de l'outil de perçage le long de l'axe d'une amplitude suffisante pour rompre les copeaux formés tout en maintenant l'outil de perçage dans l'alésage en cours de perçage.

L'invention a également pour objet une machine de perçage d'un alésage pour la mise en oeuvre d'un procédé tel que défini ci-dessus.

Selon des modes particuliers de réalisation, la machine selon la revendication 1 peut encore présenter l'une ou plusieurs des caractéristiques suivantes, prise(s) isolément ou selon toutes les combinaisons techniquement possibles :
- le mouvement oscillatoire a une amplitude supérieure ou égale à l'avance de la broche au cours d'un tour du deuxième organe d'entraînement autour de l'axe par rapport au premier organe d'entraînement,
- le deuxième élément de l'ensemble formant came/suiveur de came est formé par le deuxième organe d'entraînement.

L'invention sera mieux comprise à la lecture de la description qui va suivre, donnée uniquement à titre d'exemple, et faite en se référant aux dessins annexés, sur lesquels :
- la figure 1 est une vue schématique en coupe latérale d'une machine selon l'invention, et
- les figures 2 et 3 sont des vues schématiques partielles, en coupe latérale et agrandie, illustrant une position différente du système came/suiveur de came du mécanisme d'entraînement de la machine de la figure 1.

Dans tout ce qui suit, les termes « droite », « gauche », « vertical », « horizontal », « inférieur », « supérieur », « haut » et « bas » s'entendent par rapport à la position de la machine sur les figures.

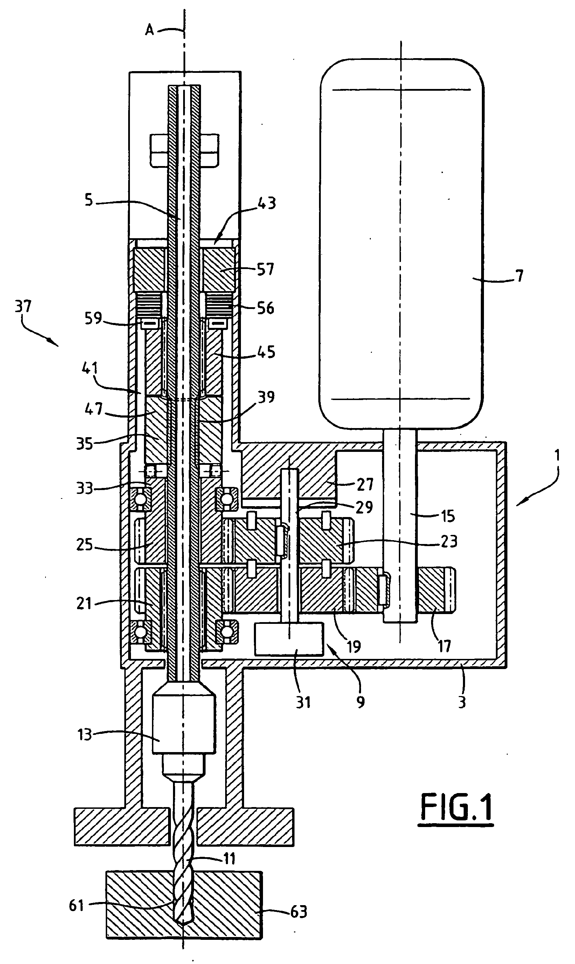

La figure 1 illustre schématiquement une machine d'usinage portative 1 qui comprend principalement :
- un carter 3,
- une broche porte-outils 5 s'étendant suivant un axe vertical A,
- un moteur 7, par exemple pneumatique, et
- un mécanisme 9 d'entraînement de la broche 5 reliant mécaniquement le moteur 7 et la broche 5.

La broche 5 est reçue dans le carter 3 de manière mobile en rotation autour de son axe A et en translation le long de cet axe A.

Afin de pouvoir assurer le perçage d'alésages, un outil de perçage 11 sous forme d'un foret est monté de manière amovible à l'extrémité inférieure 13 de la broche 5. L'arbre de sortie 15 du moteur 7 porte un pignon de sortie 17 qui engrène avec le mécanisme d'entraînement 9. Dans l'exemple représenté, le moteur 7 est disposé parallèlement à la broche 5. Toutefois, il pourrait être disposé sensiblement à angle droit par rapport à cette dernière, comme exposé par exemple dans le document FR-2 829 952.

Comme illustré par la figure 1, le mécanisme d'entraînement 9 comprend, les éléments suivants pour qu'il constitue un mécanisme dit « à avance mécanique » en français ou « positive feed drill » en anglais :
- un premier pignon/crabot 19 engrenant avec le pignon de sortie 17,
- un premier pignon 21 engrenant avec le premier pignon/crabot 19,
- un deuxième pignon/crabot 23 surmontant le premier pignon/crabot 19,
- un deuxième pignon 25 qui surmonte le premier pignon 21, et
- un crabot fixe 27 qui surmonte le deuxième pignon/crabot 23 et qui est par exemple solidaire du carter 3.

Le premier pignon 21 est enfilé sur la broche 5 et est solidaire en rotation de cette dernière. La broche 5 est mobile en translation par rapport au pignon 21 le long de l'axe A. Cette liaison entre la broche 5 et le premier pignon 21 est par exemple obtenue grâce à des cannelures.

De manière classique, le deuxième pignon/crabot 23 est porté par un coulisseau 29 pour être mobile sous l'action d'un piston 31 entre une position abaissée (fig. 1), dans laquelle le deuxième pignon/crabot 23 crabote avec le premier pignon/crabot 19 et est donc solidaire en rotation de ce dernier, et une position soulevée, dans laquelle le deuxième pignon/crabot 23 crabote avec le crabot fixe 27 et est donc fixe en rotation par rapport au carter 3.

De manière classique, les nombres de dents des pignons/crabots 19 et 23 et des pignons 21 et 25 sont adaptés pour que, lorsque les deux pignons/crabots 19 et 23 sont crabotés, le pignon 25 tourne à une vitesse légèrement supérieure à celle du pignon 21 pour entraîner la broche 5 en translation vers le bas, dans un mouvement d'avance, comme cela sera décrit par la suite.

Contrairement aux mécanismes classiques à avance mécanique, le deuxième pignon 25 est dans l'exemple décrit libre en rotation par rapport à la broche 5 et n'est donc pas vissé sur un tronçon fileté de cette dernière.

Le deuxième pignon 25 est prolongé vers le haut par un crabot rotatif 33 qui est par exemple venu de matière avec le deuxième pignon 25. En variante, le crabot 33 peut être fixé à ce dernier.

Le crabot 33 est donc solidaire en rotation du deuxième pignon 25 et peut tourner librement par rapport à la broche 5 autour de son axe A.

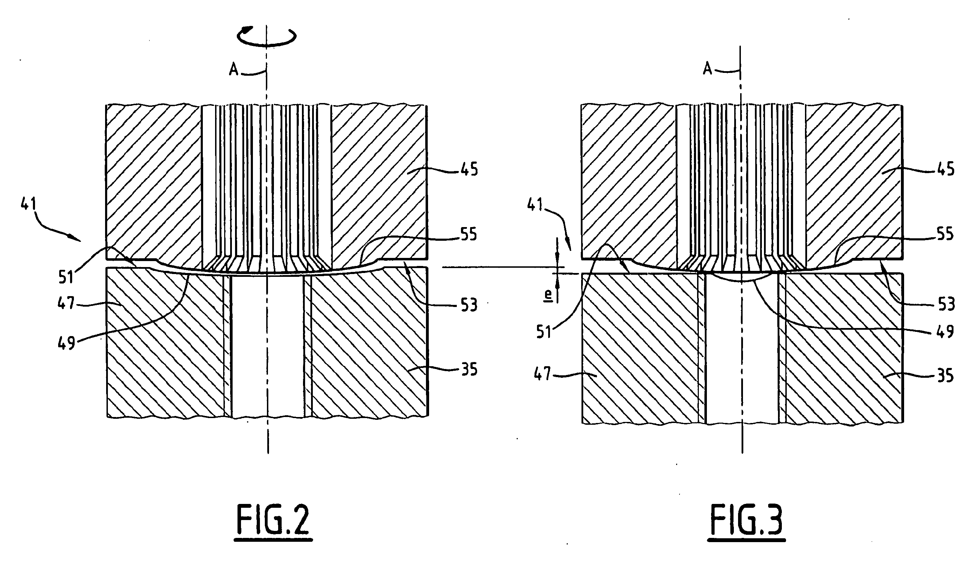

Le mécanisme d'entraînement 9 comprend en outre, comme on le voit plus précisément sur la figure 2, une noix/crabot 35, qui surmonte le crabot 33, et un système 37 de déplacement de la noix/crabot 35 par rapport au carter 3.

La noix/crabot 35 est vissée sur un tronçon fileté 39 de la broche 5. La face avant ou inférieure de la noix/crabot 35 comprend des dents d'accouplement permettant d'assurer son crabotage avec le crabot 33. La hauteur de ces dents et de celles du crabot 33 sont telles qu'elles permettent de maintenir le crabotage lorsque la noix/crabot 35 se déplace axialement entre sa position avancée et sa position reculée décrites par la suite, étant observé que les pignons 21 et 25 sont fixes axialement par rapport au carter 3.

Le système de déplacement 37 comprend un ensemble de came/suiveur de came 41 et un mécanisme 43 d'appui axial de l'ensemble 41 sur la noix/crabot 35.

L'ensemble 41 comprend dans l'exemple représenté une came 45 et un suiveur de came 47. Le suiveur de came 47 est formé par l'extrémité arrière ou supérieure de la noix/crabot 35. Plus précisément, et comme illustré par la figure 2, un relief 49 sous forme d'un creux est ménagé dans la face arrière 51 de la noix/crabot 35. Ce creux 49 a par exemple une forme allongée s'étendant orthogonalement le long d'un diamètre de la noix/crabot 35 à l'axe A.

La came 45 est enfilée sur la broche 5 en arrière de la noix/crabot 35. La face avant ou inférieure 53 de la came 45 est munie d'une rampe de came 56 qui est dans l'exemple représenté une saillie qui a une forme sensiblement complémentaire de celle du creux 49. Cela est visible sur la figure 2 où les reliefs 49 et 55 ont la même orientation angulaire par rapport à l'axe A. Sur la figure 3, ces reliefs 49 et 55 ont des orientations disposées à 90° l'une de l'autre.

La came 45 est solidaire en rotation de la broche 5. Cette solidarisation est effectuée par exemple grâce à des cannelures.

Le mécanisme 43 d'appui axial comprend par exemple des moyens 56 d'amortissement, notamment sous forme d'un ressort de poussée. Ces moyens 56 élastiques prennent appui en arrière sur une paroi 57 du carter 3 et en avant, par l'intermédiaire d'un roulement 59, sur l'extrémité arrière de la came 45. Le roulement 59 permet de limiter les frottements entre les moyens 56 d'amortissement qui sont fixés en rotation autour de l'axe A et la came 45 qui est entraînée en rotation autour de l'axe A par la broche 5.

Le mécanisme 43 solidaire du carter 3 retient la poussée résultante de l'outil 11 en maintenant la face avant 53 de la came 45 contre la face arrière 51 de la noix/crabot 35 et retient donc la noix/crabot 35. La broche 5, qui est solidaire en translation de la noix/crabot 35 du fait de la liaison hélicoïdale entre la noix/crabot 35 et la broche 5, est ainsi maintenue vers l'avant contre la poussée de la broche 5.

On observera que la vitesse de rotation relative entre la noix/crabot 35 et la came 45 est la même que celle entre les pignons 21 et 25.

La noix/crabot 35 est mobile axialement par rapport au carter 3 entre une position avancée et une position reculée.

La position reculée est illustrée par la figure 2. Dans cette position, la saillie 55 et le creux 49 ont la même orientation angulaire par rapport à l'axe A et sont donc engagés l'un dans l'autre. L'empilement formé par la noix/crabot 35 et la came 45 a donc une hauteur, comme vue le long de l'axe A, plus faible.

Dans la position avancée, illustrée par la figure 3, les reliefs 49 et 55 sont disposés angulairement à 90° l'un de l'autre. La saillie 55 n'est donc pas engagée dans le creux 49 si bien que l'empilement formé par la noix/crabot 35 et la came 45 a une hauteur supérieure de e à celle qu'il a dans la position reculée de la noix/crabot 35.

Le fonctionnement de la machine va maintenant être décrit.

Si le deuxième pignon/crabot 23 est en position abaissée et si le moteur 7 est alimenté en air sous pression, le deuxième pignon 25 et la noix/crabot 35 tournent alors autour de l'axe A à une vitesse légèrement supérieure à celle du premier pignon 21. Le mécanisme d'entraînement 9 assure alors :
- l'entraînement en rotation de la broche 5 via le pignon/crabot 19 et le premier pignon 21, et simultanément,
- l'avance de la broche 5, c'est-à-dire son déplacement en translation vers le bas le long de l'axe A, cette avance étant due à la liaison hélicoïdale entre la broche 5 et la noix/crabot 35 et à la différence de vitesses de rotation entre la noix/crabot 35 et le pignon 21 et donc la broche 5.

Dans le cas où l'entraînement de la broche 5 en rotation est effectué dans le sens horaire, le pas de la liaison hélicoïdale entre la broche 5 et la noix/crabot 35 est à gauche pour assurer le mouvement d'avance décrit.

Comme indiqué précédemment, la noix/crabot 35 et la came 45 vont tourner l'une par rapport à l'autre autour de l'axe A avec une vitesse relative égale à celle existant entre les pignons 21 et 25. Du fait de cette rotation relative, la noix/crabot 35 va passer alternativement de sa position avancée à sa position reculée.

Au mouvement général d'avance de la broche 5 décrit ci-dessus, et obtenu grâce au mécanisme d'avance mécanique 9, se combine donc un mouvement oscillatoire de translation de la broche 5 le long de l'axe A. Ce mouvement oscillatoire a une amplitude d'une course sensiblement égale à e.

Le premier mode d'entraînement décrit ci-dessus permet de percer un alésage 61 dans une pièce 63 grâce au foret 11 porté par la broche 5. L'amplitude d'oscillation de la broche 5 est relativement faible de sorte que la broche 5 reste à l'intérieur de l'alésage 61 au cours de l'opération de perçage.

Typiquement, l'amplitude d'oscillation est sensiblement égale à l'avance de la broche 5, c'est-à-dire à l'avance de cette dernière le long de l'axe A au cours d'un tour du pignon 25 par rapport au pignon 21.

La machine 1 offre également un deuxième mode d'entraînement, décrit ci-dessous.

Si le deuxième pignon/crabot 23 passe dans sa position soulevée, le mécanisme d'entraînement 9 assure alors :
- l'entraînement en rotation de la broche 5 via le premier pignon/crabot 19 et le premier pignon 21, et simultanément,
- le recul de la broche 5, c'est-à-dire son déplacement en translation vers le haut le long de l'axe A, le deuxième pignon/crabot 23, le deuxième pignon 25, le crabot 33 et la noix/crabot 35 étant alors fixes, la rotation de la broche 5 autour de son axe A assurant le mouvement de recul du fait de la liaison hélicoïdale entre la noix/crabot 35 et la broche 5 du fait du pas à gauche.

Ce deuxième mode d'entraînement permet de faire reculer la broche 5 à l'issue du perçage de l'alésage.

Comme indiqué précédemment, lors de l'opération de perçage, la broche 5 va être animée d'un mouvement général de translation vers l'avant combiné à un mouvement oscillatoire de translation de plus faible amplitude. Ce mouvement oscillatoire va provoquer, à chaque recul de la broche 5, une rupture des copeaux formés. Ce fractionnement des copeaux formés va faciliter d'une part leur évacuation et d'autre part l'obtention d'un alésage 61 de très grande précision avec un état de surface de grande qualité, même pour de très grandes profondeurs.

En outre, le mouvement oscillatoire de la broche 5 est obtenu grâce à l'ensemble de came/suiveur de came 41 et ne nécessite donc pas l'emploi d'un système pneumatique ou électronique de commande. La machine 1 est donc simple.

Pour autant, le temps de perçage d'un tel alésage est réduit, puisqu'il n'est pas nécessaire de retirer complètement la broche 5 de l'alésage 61 en cours de formation.

On observera en outre que la fréquence d'oscillation de la broche 5 est proportionnelle à la vitesse relative entre la noix/crabot 35 et la came 45. Cette fréquence d'oscillation est donc réduite, ce qui limite les vibrations indésirables et les nuisances sonores.

On observera encore que les profils des reliefs 49 et 55 ne présentent pas d'arêtes vives afin d'éviter les chocs et les percussions. L'absence de choc permet de conserver intacte la pointe et les arêtes coupantes du foret 11.

Plus généralement, la course oscillatoire de la broche 5 pourra être supérieure à une fraction de l'avance de la broche 5 mais sera maintenue suffisamment faible pour ne pas affecter l'opération de perçage. Elle sera notamment telle que le foret 11 restera dans l'alésage 61 au cours de l'essentiel de l'opération de perçage. Elle sera de préférence de l'ordre de grandeur de l'avance de la broche 5, et par exemple inférieure à 3 fois l'avance de la broche 5.

De même, d'autres types d'ensemble came/suiveur de came 41 peuvent être utilisés. Ceux-ci peuvent comprendre par exemple plusieurs suiveurs de cames. Ils peuvent également comprendre des surfaces de rampe ménagées sur les faces en regard 51 et 53 de la noix/crabot 35 et de la came 45 avec des billes intercalées entre ces deux faces.

En outre, l'entraînement en rotation des éléments de l'ensemble de came/suiveur de came 41 peut être différent de celui décrit précédemment. Ainsi, le deuxième pignon 25 peut être vissé sur la broche 5 et soumis directement à un mouvement oscillatoire, sans qu'il soit nécessaire de prévoir une noix/crabot 35.

L'enchaînement du premier mode d'entraînement, c'est-à-dire l'entraînement en rotation et simultanément l'avance de la broche 5, et du deuxième mode d'entraînement, c'est-à-dire l'entraînement en rotation et simultanément le recul de la broche 5, puis l'arrêt de l'alimentation du moteur 7 peuvent être commandés de manière classique, par exemple automatiquement par le circuit pneumatique d'alimentation du moteur 7, après actionnement du bouton de mise en marche de la machine 1.

Plus généralement, le déplacement du premier organe 21 d'entraînement en rotation de la broche 5 et le déplacement du deuxième organe 35 d'entraînement en translation de la broche 5 peuvent être assurés par deux moteurs distincts asservis par exemple électroniquement l'un à l'autre.

## Revendications

1. Machine de perçage d'un alésage (61), comprenant :
- un carter (3),
- une broche porte-outils (5) s'étendant le long d'un axe (A) et destinée à porter un outil de perçage (11),
- un mécanisme d'entraînement (9) de la broche porte-outils, apte à entraîner simultanément l'outil de perçage (11) en rotation le long d'un axe (A) et en translation le long de l'axe (A) selon un mouvement d'avance, , le mécanisme d'entraînement (9) comprenant :
. un premier organe (21) d'entraînement en rotation de la broche (5) autour de son axe par rapport au carter (3),
. un deuxième organe (35) d'entraînement en translation de la broche le long de son axe par rapport au carter (3), le deuxième organe d'entraînement (35) étant vissé sur un tronçon fileté (39) de la broche (5), de sorte que la broche (5) avance ou recule le long de l'axe (A) en fonction de la vitesse relative de rotation des organes d'entraînement (21, 35),
**caractérisé en ce que** :
- le mécanisme d'entraînement (9) est adapté pour combiner le mouvement d'avance de la broche (5) avec un mouvement oscillatoire le long de l'axe (A) d'une amplitude suffisante pour rompre les copeaux formés tout en maintenant l'outil de perçage (11) dans l'alésage (61) en cours de perçage, et
- le mécanisme d'entraînement (9) comporte un ensemble de came/suiveur de came (41) pour assurer le mouvement oscillatoire de la broche (5), l'ensemble de came/suiveur de came (41) comprenant au moins un élément formant came (45) et un élément formant suiveur de came (47), un premier (45) de ces éléments étant solidaire en rotation de la broche (5) et le deuxième (47) de ces éléments étant solidaire en rotation du deuxième organe d'entraînement (35).

2. Machine selon la revendication 1, dans laquelle le deuxième élément de l'ensemble formant came/suiveur de came (41) est formé par le deuxième organe d'entraînement (35).

3. Machine selon la revendication 1 ou 2, dans laquelle le mouvement oscillatoire a une amplitude supérieure ou égale à l'avance de la broche (5) au cours d'un tour du deuxième organe d'entraînement (35) autour de l'axe (A) par rapport au premier organe d'entraînement (21).

4. Machine selon l'une quelconque des revendications précédentes, dans laquelle ledit deuxième organe d'entraînement (35) est mobile axialement par rapport au carter (3) entre une position avancée et une position reculée.

5. Machine selon l'une quelconque des revendications précédentes, dans laquelle le mécanisme d'entraînement (9) comprend un mécanisme d'appui axial (43) de l'ensemble came/suiveur de came (41) sur ledit deuxième organe (35).

6. Machine selon la revendication 5, dans laquelle le mécanisme d'appui axial (43) comprend des moyens élastiques (56) prenant appui en arrière sur le carter (3) et en avant sur la came (45).

7. Machine selon la revendication 6 prise en combinaison avec la revendication 4, dans laquelle :
- le premier organe d'entraînement est un premier pignon (21) enfilé sur la broche (5) et solidaire en rotation de la broche (5),
- le mécanisme d'entraînement (9) comprend un deuxième pignon (25) surmontant ledit premier pignon (21) et libre en rotation par rapport à la broche (5),
- le deuxième pignon (25) est prolongé par un crabot rotatif (33) solidaire en rotation du deuxième pignon (25),
- le deuxième organe d'entraînement (35) est formé par une noix/crabot (35) comprenant des dents d'accouplement permettant d'assurer son crabotage avec le crabot (33), la hauteur de ces dents et de celles du crabot (33) étant telles qu'elles permettent de maintenir le crabotage lorsque la noix/crabot (35) se déplace axialement entre sa position avancée et sa position reculée.

## Claims

1. Tool for drilling a bore (61), wherein the tool comprises:
- a easing (3),
- a tool-holder spindle (5) which extends along an axis (A) and which is to carry a drilling tool (11),
- a mechanism (9) for driving the tool-holder spindle, which mechanism is capable of driving the drilling tool (11) simultaneously in rotation about an axis (A) and in translation along the axis (A) in accordance with an advance movement, the drive mechanism (9) comprising:
a first member (21) for driving the spindle (5) in rotation about its axis relative to the casing (3),
a second member (35) for driving the spindle in translation along its axis relative to the casing (3), the second drive member (35) being screwed onto a threaded portion (39) of the spindle (5), so that the spindle (5) advances or returns along the axis (A) as a function of the relative rate of rotation of the drive members (21, 35),
**characterized in that**:
- the drive mechanism (9) is suitable for combining the advance movement of the spindle (5) with an oscillating movement along the axis (A) of an amplitude sufficient to break up the swarf formed, while at the same time keeping the drilling tool (11) in the bore (61) which is in the process of being drilled, and
- the drive mechanism (9) comprises a cam/cam follower unit (41) for ensuring the oscillating movement of the spindle (5), the cam/cam follower unit (41) comprising at least one element forming a cam (45) and one element forming a cam follower (47), and a first (45) of those elements being fixed for rotation with the spindle (5) and the second (47) of those elements being fixed for rotation with the second drive member (35).

2. Tool according to claim 1, wherein the second element of the unit (41) forming the cam/cam follower is formed by the second drive member (35).

3. Tool according to claim 1 or 2, wherein the oscillating movement has an amplitude greater than or equal to the advance of the spindle (5) in the course of one revolution of the second drive member (35) about the axis (A) relative to the first drive member (21).

4. Tool according to any one of 2 preceding claims, wherein the second drive member (35) is mobile axially relative to the casing (3) between an advanced position and a returned position.

5. Tool according to any one of preceding claims, wherein the drive mechanism (9) comprises a mechanism (43) for the axial bearing of the cam/cam follower unit (41) on the said second member (35).

6. Tool according to claim 5, wherein the axial bearing mechanism (43) comprises resilient means (56) bearing at the rear on the casing (3) and at the front on the cam (45).

7. Tool according to claim 6 taken in combination with claim 4, wherein:
- the first drive member is a first gear wheel (21) slipped onto the spindle (5) and fixed for rotation with the spindle (5),
- the drive mechanism (9) comprises a second gear wheel (25) surmounting the first gear wheel (21) and free in rotation relative to the spindle (5),
- the second gear wheel (25) is extended by a rotary positive clutch (33) fixed for rotation with the second gear wheel (25),
- the second drive member (35) is formed by a dog/positive clutch (35) comprising coupling teeth enabling it to be form-fitted to the positive clutch (33), the height of those teeth and of those of the positive clutch (33) being such that they enable the form-fit to be maintained when the dog/positive crutch (35) is displaced axially between its advanced position and its returned position.

## Patentansprüche

1. Maschine zum Bohren einer Bohrung (61), umfassend:
- ein Gestell (3),
- eine Werkzeughalterspindel (5), die langs einer Achse (A) verläuft und dazu bestimmt ist, ein Bohrwerkzeug (11) zu tragen,
- einen Antriebsmechanismus (9) für die Werkzeughalterspindel, in der Lage, gleichzeitig das Bohrwerkzeug (11) um eine Achse (A) in Rotation zu versetzen und längs der Achse (A) zu einer Vorwärtsbewegung zu veranlassen, wobei der Antriebsmechanismus (9) umfasst:
• ein erstes Organ (21) zum Versetzen der Spindel (5) in Rotation um ihre Achse relativ zum Gestell (3),
• ein zweites Organ (35) zum Veranlassen einer Translationsbewegung der Spindel längs ihrer Achse relativ zum Gestell (3), wobei das zweite Antriebsorgan (35) auf einen gewindeten Abschnitt (39) der Spindel (5) geschraubt ist, derart, dass die Spindel (5) sich in Abhängigkeit von der relativen Rotationsgeschwindigkeit der Antriebsorgane (21, 35) längs der Achse (A) vor- oder zurückbewegt,
**dadurch gekennzeichnet, dass**
- der Antriebsmechanismus (9) dafür eingerichtet ist, die Vorwärtsbewegung der Spindel (5) mit einer Hin- und Herbewegung längs der Achse (A) mit einer ausreichenden Amplitude zu kombinieren, um die gebildeten Spane abzubrechen und dabei das Bohrwerkzeug (11) in der Bohrung (61) zu halten, die gerade ausgebohrt wird, und
- der Antriebsmechanismus (9) eine Kurvenscheiben-/HebelAnordnung (41) umfasst, um die Hin- und Herbewegung der Spindel (5) sicherzustellen, wobei die Kurverscheiben-/Hebel-Anordnung (41) mindestens ein eine Kurvenscheibe (45) darstellendes Teil aufweist und ein den Hebe (47) darstellendes Teil, wobei ein erstes (45) dieser Teile rotationsstarr mit der Spindel (5) verbunden ist und das zweite (47) dieser Teile rotationsstarr mit dem zweiten Antriebsorgan (35) verbunden ist.

2. Maschine nach Patentanspruch 1, in der das zweite Antriebsorgan (35) das zweite Teil der Kurvenscheiben-/Hebel-Anordnung (41) darstellt.

3. Maschine nach Patentanspruch 1 oder 2, in der die Hin- und Herbewegung eine Amplitude hat, die größer oder gleich ist, wie der Vorschub der Spindel (5) während einer Umdrehung des zweiten Antriebsorgans (35) um die Achse (A) relativ zum ersten Antriebsorgan (21).

4. Maschine nach irgendeinem der vorangehenden Patentansprüche, in der das genannte zweite Antriebsorgan (35) relativ zum Gestell (3) in Achsenrichtung zwischen einer vorgerückten und einer zurückgezogenen Stellung beweglich ist.

5. Maschine nach irgendeinem der vorangehenden Patentansprüche, in der der Antriebsmechanismus (9) einen Mechanismus zum axialen Drucken (43) der Kurvenscheiben-/Hebel-Anordnung (41) an das genannte zweite Organ (35) aufweist.

6. Maschine nach Patentanspruch 5, in der der Mechanismus zum axialen Drücken (43) elastische Mittel (56) umfasst, die sich nach hinten am Gestell (3) abstützen und nach vorne an der Kurvenscheibe (45).

7. Maschine nach Patentanspruch 6 in Verbindung mit Patentanspruch 4, in der:
- das erste Antriebsorgan ein erstes Ritzel (21) ist, das auf die Spindel (5) aufgeschoben und mit der Spindel (5) rotationsstarr verbunden ist.
- der Antriebsmechanismus (9) ein zweites Ritzel (25) umfasst, das über dem genannten ersten Ritzel (21) angeordnet und relativ zur Spindel (5) frei drehbar ist,
- wobei sich das zweite Ritzel (25) in einer drehbaren Kupplungsklaue (33) fortsetzt, die mit dem zweiten Ritzel (25) rotationsstarr verbunden ist,
- das zweite Antriebsorgan (35) aus einer Kupplungsklaue/-rad (35) besteht, die über Koppelzähne verfügt, die erlauben, ihre Ankupplung an die Kupplungsklaue (33) zu ermöglichen, wobei die Höhe dieser Zähne und derer der Kupplungsklaue (33) derart gewählt sind, dass sie erlauben, die Ankupplung aufrechtzuerhalten, wenn sich die Kupplungsklaue/-rad (35) in Achsenrichtung zwischen ihrer vorgerückten und ihrer zurückgezogenen Stellung bewegt.
